# EUROPÄISCHE PATENTANMELDUNG

(11) **EP 2 157 382 A2**
(43) Veröffentlichungstag der Anmeldung: **24.02.2010**
(21) Anmeldenummer: 09167689.0
(22) Anmeldetag: 12.08.2009
(51) Int. Cl.: F24H 1/32

(54) **Heizgerät**

(30) Priorität: 22.08.2008 DE 102008039403
(71) Anmelder: Robert Bosch GmbH, 70442 Stuttgart (DE)
(72) Erfinder: Rausch, Rainer, 36304 Alsfeld (DE)

(57) **Zusammenfassung**

Die Erfindung betrifft ein Heizgerät, insbesondere Brennwertheizgerät, umfassend einen Gas- oder Ölbrenner in einer zylindrischen Brennkammer (1), welche radial von einem zylindrischen Wärmetauscher begrenzt ist, mindestens einen Spalt (3) für den Durchtritt von Heizgasen durch den Wärmetauscher, ein vorderes Deckelelement (3) zur Aufnahme des Brenners, ein hinteres Deckelelement (4) als Verschluss für die Brennkammer (1), Vorund Rücklaufanschlussstutzen sowie radial außerhalb des Wärmetauschers mit einem Abgassammelraum (4) unter einem umgebenden Mantel mit einem Anschlussstutzen für eine Abgasleitung.

Der Erfindung liegt die Aufgabe zugrunde, den Wärmetauscher eines Heizgerätes, insbesondere eines Brennwertheizgerätes, besonders im Hinblick auf möglichst kompakte Abmessungen und gute Wärmeübertragungseigenschaften zu optimieren.

Gekennzeichnet ist die Erfindung dadurch, dass der Wärmetauscher aus mehreren aneinandergereihten Ringsegmenten (2) besteht, wobei jeweils zwei benachbarte Ringsegmente (2) einen Spalt (3) für den Durchtritt von Heizgasen begrenzen, und dass die Ringsegmente (2) heizwasserseitig jeweils in mindestens zwei Strömungskanäle (6, 7) aufgeteilt sind.

## Beschreibung

Die Erfindung betrifft ein Heizgerät, insbesondere ein Brennwertheizgerät, nach dem Oberbegriff des Patentanspruches 1.

Gattungsgemäße Heizgeräte werden mit einem Gas- oder Ölbrenner befeuert und besitzen eine zylindrische Brennkammer, welche radial von einem schraubenförmig gewendelten Wärmetauscher begrenzt ist. Mindestens ein Spalt zwischen den Rohrwendeln für den Durchtritt der Heizgase stellt die eigentliche Wärmetauscherfläche dar. Weiterhin üblich sind ein vorderes Deckelelement zur Aufnahme des Brenners, ein hinteres Deckelelement als Verschluss für die Brennkammer, Vor- und Rücklaufanschlussstutzen sowie ein Abgassammelraum, welcher radial außerhalb des Wärmetauschers unter einem umgebenden Mantel angeordnet und mit einem Anschlussstutzen für eine Abgasleitung versehen ist. Hinsichtlich der heizwasserseitigen Strömungsführung handelt es sich um einen zwangsdurchströmten Wärmetauscher. Eine Umwälzpumpe sorgt für einen vorgegebenen Wasservolumenstrom durch die zumeist relativ engen Wasserkanäle. Auf diese Weise sind trotz geringen Wasserinhaltes recht hohe, heizgasseitig eingetragene Wärmestromdichten realisierbar.

Aus der DE 20 2005 011 633 U1 ist ein Heizgerät mit zwei schraubenförmig gewendelten Wärmetauschern bekannt, die ineinander verschraubt und parallel zueinander von einem Heizmedium durchströmbar ausgebildet sind. Dabei sind die nebeneinander angeordneten Wendelenden miteinander verbunden und weisen einen gemeinsamen Anschlussstutzen auf. Vor- und Rücklaufanschlussstutzen befinden sich auf gegenüberliegenden Stirnseiten des Wärmetauschers.

Die DE 10 2004 023 711 B3 zeigt ebenfalls ein Heizgerät mit einem schraubenförmig gewendelten Wärmetauscher und mindestens zwei hydraulisch miteinander verbundenen Wendelbereichen. Diese sind durchmesserunterschiedlich ausgebildet und können schraubenförmig ineinander gedreht angeordnet sein. Das Abgas strömt somit zuerst durch die Spalte der inneren Wendel und dann über einen Zwischenraum weiter durch die Spalte in der äußeren Wendel. Weil auch bei dieser Ausführung ein einstückiges Rohr, insbesondere Vierkantrohr, eingesetzt wird, ist es fertigungstechnisch dabei kaum möglich, auf die Spaltgeometrie Einfluss zu nehmen.

Der Erfindung liegt die Aufgabe zugrunde, den Wärmetauscher eines Heizgerätes, insbesondere eines Brennwertheizgerätes, besonders im Hinblick auf möglichst kompakte Abmessungen und gute Wärmeübertragungseigenschaften zu optimieren.

Erfindungsgemäß wird dies mit den Merkmalen des Patentanspruches 1 gelöst. Vorteilhafte Weiterbildungen sind den Unteransprüchen zu entnehmen.

Das aus einer zylindrischen Brennkammer und einem radial diese begrenzenden, zylindrischen Wärmetauscher bestehende Heizgerät ist dadurch gekennzeichnet, dass der Wärmetauscher aus mehreren aneinandergereihten Ringsegmenten besteht, wobei jeweils zwei benachbarte Ringsegmente einen Spalt für den Durchtritt von Heizgasen begrenzen, und dass die Ringsegmente heizwasserseitig jeweils in mindestens zwei Strömungskanäle aufgeteilt sind.

Dazu weisen die Ringsegmente heizwasserseitig mindestens eine Trennwand auf, so dass ein innerer, brennkammernaher Strömungskanal und mindestens ein äußerer, durchmessergrößerer Strömungskanal entsteht. Die mindestens zwei Strömungskanäle werden hydraulisch miteinander verbunden und in Reihe durchströmt. Dabei erfolgt die hydraulische Verbindung so, dass zuerst der äußere, brennkammerferne Strömungskanal, welcher mit dem Rücklaufanschlussstutzen verbunden ist, und danach der innere, brennkammernahe Strömungskanal, welcher mit dem Vorlaufanschlussstutzen verbunden ist, durchströmt wird.

Dabei weist der innere, brennkammernahe Strömungskanal vorteilhafterweise einen geringeren Querschnitt als der äußere, brennkammerferne Strömungskanal auf. Der innere, brennkammernahe Strömungskanal ist so bemessen, dass sich höhere Strömungsgeschwindigkeiten als im äußeren, brennkammerfernen Strömungskanal einstellen, weil in Brennernähe die größte Wärmemenge abgeführt werden muss. Außen kommt somit zunächst das relativ kühle Rücklaufwasser an und ermöglicht daher ein starkes Herunterkühlen der Heizgase.

Zwischen zwei benachbarten Ringsegmenten sind jeweils Überströmöffnungen in den mindestens zwei Strömungskanälen um etwa 180° versetzt angeordnet. Dabei ist dieser Versatz mindestens in allen mittleren der aneinandergereihten Ringsegmente vorhanden, und in einem Endbereich ist eine Überströmöffnung vom äußeren zum inneren Strömungskanal vorgesehen.

Ein Ringsegment des zylindrischen Wärmetauschers besteht aus mindestens zwei miteinander verbundenen, identischen Halbschalen, wobei insbesondere jeweils eine umlaufende Schweißnaht am inneren und am äußeren Umfang vorgesehen ist. In einem Ringsegment ist an der Innenseite mindestens einer Halbschale die mindestens eine umlaufende Trennwand angebracht ist.

In einer weiteren Ausführungsform kann mindestens eine Halbschale eines Ringsegmentes an der Innenseite eine angeformte Sicke als umlaufende Trennwand aufweisen. Diese Sicke reicht bis an die Innenseite der gegenüberliegenden Halbschale. Weiterhin können auch beide Halbschalen eines Ringsegmentes an der Innenseite jeweils eine angeformte Sicke als umlaufende Trennwand aufweisen. In diesem Fall berühren sich die Sicken der gegenüberliegenden Halbschalen, stehen sich gegenüber und/oder liegen überlappend aneinander an. Dabei sind die beiden Strömungskanäle im Bereich der Sicken der gegenüberliegenden Halbschalen mit einem Dichtmittel oder Klebstoff abgedichtet. Alternativ dazu können eine Punktschweißung und ein Anliegen der Sicken ausreichen, weil die Kanäle nicht völlig flüssigkeitsdicht voneinander getrennt sein müssen.

Die Geometrie des Spaltes für den Durchtritt von Heizgasen, insbesondere der Wärme übertragenden Oberflächen, ist durch den Umformvorgang bei der Herstellung der Halbschalen aus Blech beeinflussbar. Beispielsweise können Prägungen und/oder Oberflächenstrukturen, insbesondere zur Turbulenzerzeugung, eingebracht werden. Vorteilhafterweise sind eine oder zwei benachbarte, sich gegenüberstehende, den Spalt begrenzende Oberflächen mit Vorsprüngen versehen. Diese definieren die Spaltbreite und stützen sich aufeinander und/oder auf der gegenüberliegenden Oberfläche ab. Zwei benachbarte, sich gegenüberstehende, den Spalt begrenzende Oberflächen sind vorzugsweise durch Punktschweißung miteinander verbunden, wobei der freie Spaltquerschnitt überwiegend gewährleistet ist und nur eine punktweise Berührung bzw. Spalteinengung vorliegt.

Mit der erfindungsgemäßen Gestaltung entsteht ein Wärmetauscher für ein Heizgerät mit bester Eignung für Brennwertbetrieb, sehr kompakten Abmessungen und guten Wärmeübertragungseigenschaften. Alle wasserseitigen Anschlüsse befinden sich gut zugänglich auf einer Seite. Durch die Aufteilung der Strömungskanäle ist die Temperaturverteilung im Wärmetauscher optimiert und die Effektivität gegenüber bekannten Prinzipien gesteigert. Auch eine vertikale Anordnung der Trennwand im Ringsegment, also in radialer Richtung ist möglich. Der Ringsegment-Aufbau mit Halbschalen bietet neben der einfachen Herstellung auch den Vorteil, unterschiedliche Längen für verschiedene Feuerungs- und Wärmetauscherleistungen variabel abzudecken. Trotzdem bleiben dann alle stirnseitig angeordneten Anbauteile sowie die Verbindung zwischen Deckelelementen und Wasser führendem Ringsegment-Körper gleich. Nur der umgebende Mantel variiert. Wegen der niedrigen Abgastemperaturen kann dieser sogar aus Kunststoff hergestellt werden.

Die Zeichnung stellt ein Ausführungsbeispiel der Erfindung dar. Es zeigt einen Wärmetauscher eines Heizgerätes:

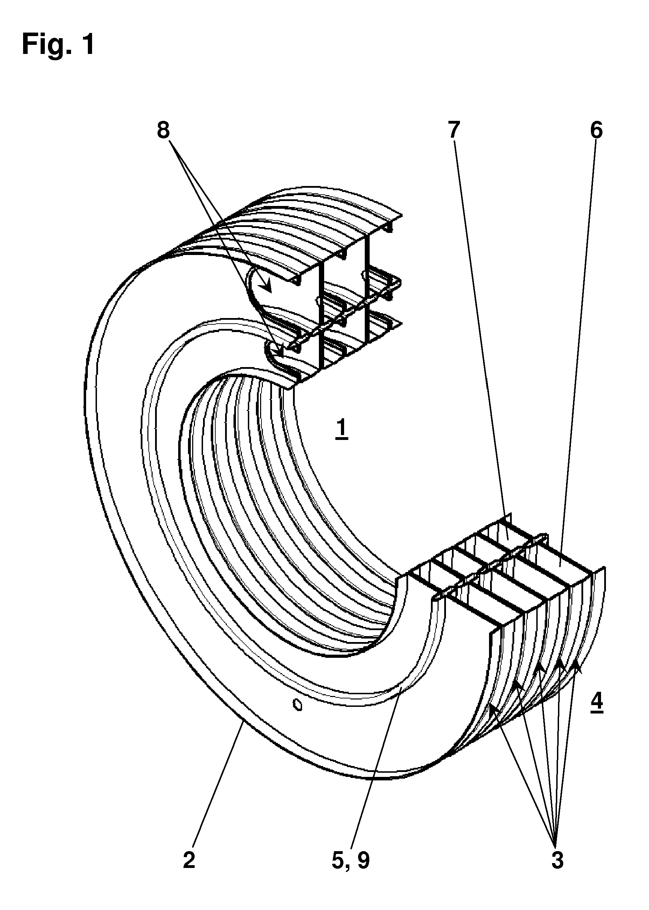

- Fig. 1:: in einer perspektivischen Gesamtansicht mit einem Schnitt im Eckbereich und einem Querschnitt durch ein Ringsegment,

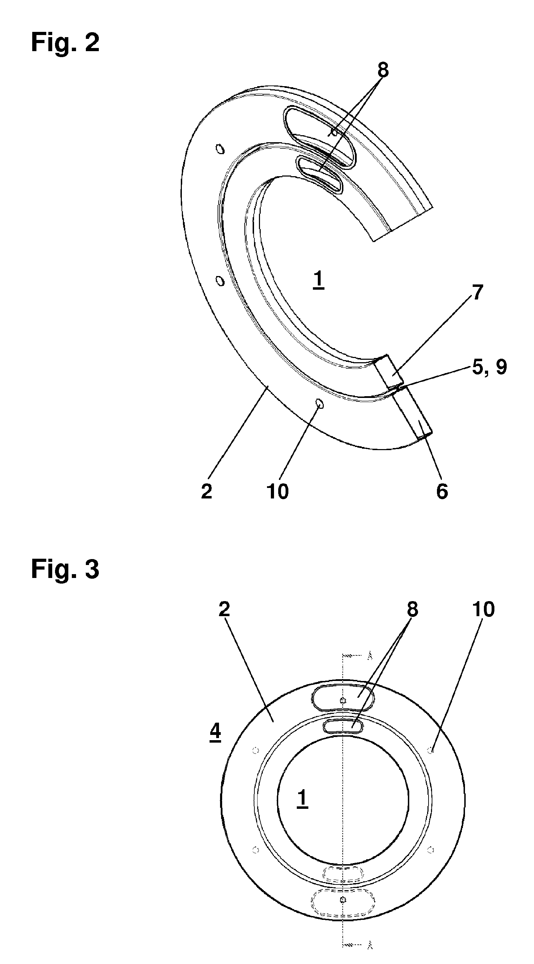

- Fig. 2:: ein Ringsegment mit einem Schnitt im Eckbereich,
- Fig. 3:: ein Ringsegment in der Vorderansicht,

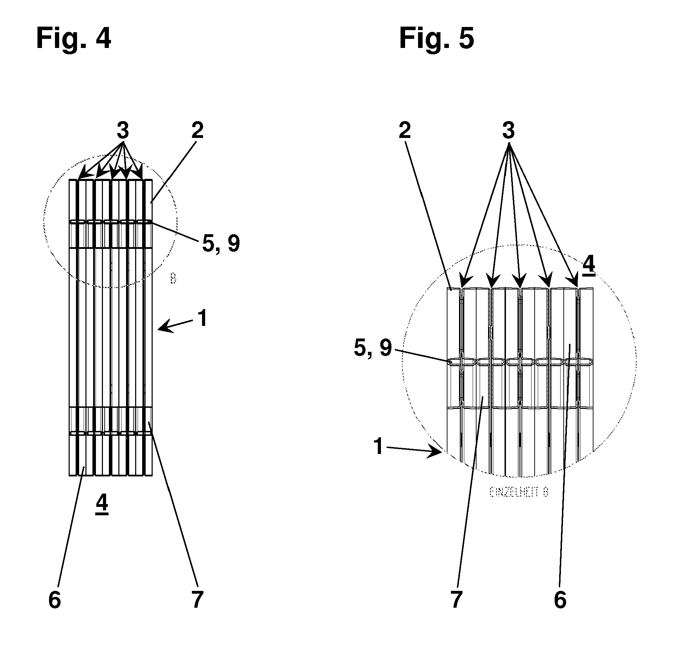

- Fig. 4:: in der Seitenansicht und
- Fig. 5:: mit vergrößertem Eckbereich in der Seitenansicht.

Das Heizgerät besitzt eine zylindrische Brennkammer 1, welche radial von einem zylindrischen Wärmetauscher, bestehend aus mehreren aneinandergereihten Ringsegmenten 2, begrenzt ist. Dieser weist mehrere Spalte 3 für den Durchtritt von Heizgasen auf, wobei sich ein Abgassammelraum 4 radial außerhalb des Wärmetauschers befindet.

Jeweils zwei benachbarte Ringsegmente 2 begrenzen einen Spalt 3. Die Ringsegmente 2 sind heizwasserseitig mit einer Trennwand 5 jeweils in zwei Strömungskanäle 6, 7 aufgeteilt, welche in Reihe durchströmt werden. Dabei wird zuerst der äußere, brennkammerferne Strömungskanal 6, welcher mit einem nicht dargestellten Rücklaufanschlussstutzen verbunden ist, und danach der innere, brennkammernahe Strömungskanal 7, welcher mit einem ebenfalls nicht dargestellten Vorlaufanschlussstutzen verbunden ist, durchströmt.

Überströmöffnungen 8 befinden sich abwechselnd oben und unten, um etwa 180° versetzt angeordnet, so dass das Heizwasser in den beiden Strömungskanälen 6, 7 zwischen zwei benachbarten Ringsegmenten 2 alternierend im oberen und unteren Bereich überströmt. Dargestellt sind in der Zeichnung mittlere Ringsegmente 2, denn in einem für den Endbereich vorgesehenen, weiteren und speziell gestalteten Ringsegment 2 ist eine weitere, nicht dargestellte Überströmöffnung vom äußeren zum inneren Strömungskanal 6, 7 vorgesehen. Die Strömungsrichtung kehrt sich somit an einer Stirnseite der Anordnung um.

Ein Ringsegment 2 des zylindrischen Wärmetauschers besteht aus zwei miteinander verbundenen, identischen Halbschalen. In jedem Ringsegment 2 sind an der Innenseite beider Halbschalen jeweils Sicken 9 als umlaufende Trennwand 5 angeformt. Dabei stehen sich die Sicken 9 der gegenüberliegenden Halbschalen gegenüber und die beiden Strömungskanäle 6, 7 sind im Bereich der Sicken 9 mit einem Dichtmittel oder Klebstoff abgedichtet.

Benachbarte, sich gegenüberstehende, den Spalt 3 begrenzende Oberflächen sind mit Vorsprüngen 10 versehen, welche die Spaltbreite definieren und sich aufeinander und/oder auf der gegenüberliegenden Oberfläche abstützen.

## Patentansprüche

1. Heizgerät, insbesondere Brennwertheizgerät, umfassend einen Gas- oder Ölbrenner in einer zylindrischen Brennkammer (1), welche radial von einem zylindrischen Wärmetauscher begrenzt ist, mindestens einen Spalt (3) für den Durchtritt von Heizgasen durch den Wärmetauscher, ein vorderes Deckelelement (3) zur Aufnahme des Brenners, ein hinteres Deckelelement (4) als Verschluss für die Brennkammer (1), Vor- und Rücklaufanschlussstutzen sowie radial außerhalb des Wärmetauschers mit einem Abgassammelraum (4) unter einem umgebenden Mantel mit einem Anschlussstutzen für eine Abgasleitung,
**dadurch gekennzeichnet, dass** der Wärmetauscher aus mehreren aneinandergereihten Ringsegmenten (2) besteht, wobei jeweils zwei benachbarte Ringsegmente (2) einen Spalt (3) für den Durchtritt von Heizgasen begrenzen, und dass die Ringsegmente (2) heizwasserseitig jeweils in mindestens zwei Strömungskanäle (6, 7) aufgeteilt sind.

2. Heizgerät nach Anspruch 1,
**dadurch gekennzeichnet, dass** die Ringsegmente (2) heizwasserseitig mindestens eine Trennwand (5) aufweisen und **dadurch** in einen inneren, brennkammernahen Strömungskanal (7) und mindestens einen äußeren, durchmessergrößeren Strömungskanal (6) aufgeteilt sind.

3. Heizgerät nach Anspruch 1 oder 2,
**dadurch gekennzeichnet, dass** die mindestens zwei Strömungskanäle (6, 7) hydraulisch miteinander verbunden sind und in Reihe durchströmt werden.

4. Heizgerät nach einem der Ansprüche 1 bis 3,
**dadurch gekennzeichnet, dass** die mindestens zwei Strömungskanäle (6, 7) so hydraulisch miteinander verbunden sind, dass zuerst der äußere, brennkammerferne Strömungskanal (6), welcher mit dem Rücklaufanschlussstutzen verbunden ist, und danach der innere, brennkammernahe Strömungskanal (7), welcher mit dem Vorlaufanschlussstutzen verbunden ist, durchströmt wird.

5. Heizgerät nach einem der Ansprüche 1 bis 4,
**dadurch gekennzeichnet, dass** der innere, brennkammernahe Strömungskanal (7) einen geringeren Querschnitt als der äußere, brennkammerferne Strömungskanal (6) aufweist.

6. Heizgerät nach einem der Ansprüche 1 bis 5,
**dadurch gekennzeichnet, dass** der innere, brennkammernahe Strömungskanal (7) so bemessen ist, dass sich höhere Strömungsgeschwindigkeiten als im äußeren, brennkammerfernen Strömungskanal (6) einstellen.

7. Heizgerät nach einem der Ansprüche 1 bis 6,
**dadurch gekennzeichnet, dass** Überströmöffnungen (8) in den mindestens zwei Strömungskanälen (6, 7) zwischen zwei benachbarten Ringsegmenten (2) um etwa 180° versetzt angeordnet sind, wobei dieser Versatz mindestens in allen mittleren der aneinandergereihten Ringsegmente (2) vorhanden ist, und wobei in einem Endbereich eine Überströmöffnung vom äußeren zum inneren Strömungskanal (6, 7) vorgesehen ist.

8. Heizgerät nach einem der Ansprüche 1 bis 7,
**dadurch gekennzeichnet, dass** ein Ringsegment (2) des zylindrischen Wärmetauschers aus mindestens zwei miteinander verbundenen, identischen Halbschalen besteht, wobei insbesondere jeweils eine umlaufende Schweißnaht am inneren und am äußeren Umfang vorgesehen ist.

9. Heizgerät nach einem der Ansprüche 1 bis 8,
**dadurch gekennzeichnet, dass** in einem Ringsegment (2) an der Innenseite mindestens einer Halbschale die mindestens eine umlaufende Trennwand (5) angebracht ist.

10. Heizgerät nach einem der Ansprüche 1 bis 9,
**dadurch gekennzeichnet, dass** mindestens eine Halbschale eines Ringsegmentes (2) an der Innenseite eine angeformte Sicke (9) als umlaufende Trennwand (5) aufweist, welche bis an die Innenseite der gegenüberliegenden Halbschale reicht.

11. Heizgerät nach einem der Ansprüche 1 bis 10,
**dadurch gekennzeichnet, dass** beide Halbschalen eines Ringsegmentes (2) an der Innenseite jeweils eine angeformte Sicke (9) als umlaufende Trennwand (5) aufweisen, wobei sich die Sicken (9) der gegenüberliegenden Halbschalen berühren, gegenüberstehen und/oder überlappend aneinander anliegen, und wobei die beiden benachbarten Strömungskanäle (6, 7) im Bereich der Sicken (9) der gegenüberliegenden Halbschalen mit einem Dichtmittel oder Klebstoff abgedichtet sind.

12. Heizgerät nach einem der Ansprüche 1 bis 11,
**dadurch gekennzeichnet, dass** die Geometrie des Spaltes (3) für den Durchtritt von Heizgasen, insbesondere der Wärme übertragenden Oberflächen, durch den Umformvorgang bei der Herstellung der Halbschalen beeinflussbar ist.

13. Heizgerät nach einem der Ansprüche 1 bis 12,
**dadurch gekennzeichnet, dass** eine oder zwei benachbarte, sich gegenüberstehende, den Spalt (3) begrenzende Oberflächen mit Vorsprüngen versehen sind, welche die Spaltbreite definieren und sich aufeinander und/oder auf der gegenüberliegenden Oberfläche abstützen.

14. Heizgerät nach einem der Ansprüche 1 bis 13,
**dadurch gekennzeichnet, dass** zwei benachbarte, sich gegenüberstehende, den Spalt (3) begrenzende Oberflächen durch Punktschweißung miteinander verbunden sind, wobei der freie Spaltquerschnitt überwiegend gewährleistet ist und nur eine punktweise Berührung vorliegt.
